# FASCICULE DE BREVET EUROPEEN

(11) **EP 1 323 342 B1**
(45) Date de publication et mention de la délivrance du brevet: **17.01.2007**
(21) Numéro de dépôt: 02425724.8
(22) Date de dépôt: 27.11.2002
(51) Int. Cl.: A01D 46/26

(54) **Dispositif manuel de vibration pneumatique à entraînement bidirectionnellement orthogonal**
Manuelle pneumatische Rüttelvorrichtung mit bidirektionalem orthogonalem Antrieb
Pneumatic manual shaking device with bidirectional orthogonal driving action

(30) Priorité: 30.11.2001 IT CH20010009
(43) Date de publication de la demande: 02.07.2003
(73) Titulaire: Travaglini, Pasquale, 66043 Casoli (CH) (IT)
(72) Inventeur: Travaglini, Pasquale, 66043 Casoli (CH) (IT)

(56) Documents cités:
- EP-A- 1 051 899
- EP-A- 1 084 604
- EP-A- 1 116 432
- EP-A- 1 175 823
- CH-A- 639 530
- FR-A- 2 327 719
- US-A- 5 099 637

## Description

L'invention a pour objet un gauleur pneumatique manuel à employer à la cueillette des olives, noix, amandes, etc...Il est composé de quatre éléments gaulants qui se meuvent en couple, sur deux plans orthogonales.Les éléments sont jointes à un support (structure portante de la machine) à plan carré d'une façon très recuillie, par conséquent l'appareil prend une forme compacte et filante qui permet une pénétration facile entre les ramifications pendant la phase opérationnelle. En outre, puisque les éléments actifs se meuvent dans deux directions orthogonales, l'action de la machine se manifeste dans tout l'espace environnant.

### L'ÉTAT DE LA TECHNIQUE

Les appareils de la même classe actuellement dans le commerce , présentent tous, plus ou moins, des inconvénients qui les rendent peu pratique et fatigant à utiliser :
- ceux qui ont des éléments en forme de peigne, avec mouvement alternatif, sont encombrants et peu penetrants à cause de leur structure large et de nombreux dents dont ils sont doués ;
- ceux qui ont des éléments roulants, en plus des inconvénients du point précédent, pendant la rotation causent considérables excoriations aux ramifications à travers lesquelles les agents infectants ont accés facile ;
- tous les deux ont une limitation dans le rendement, puisque leur action se manifeste dans une seule direction.

L'appareil, objet de la présente invention, obvie à ces inconvénients grâce à sa structure compacte, à la notable légéreté (environ Kg. 1,00), à l'action bidirectionnelle et au double mouvement (de translation et de rotation) que les éléments gaulants poussent au fruit à gauler.

### DESCRIPTION TECHNIQUE

Les dessins sont représentés en vue axonométrique, sur échelle < 1 dans les tables **A** et **C,** et en grandeur naturelle dans la table **B.**
La table **A** représente les parties composantes l'appareil ;
la table **B,** l'appareil partiellement assemblé ;
la table **C,** l'appareil totalement assemblé et l'indication de la direction et le sens du mouvement des barres gaulantes.

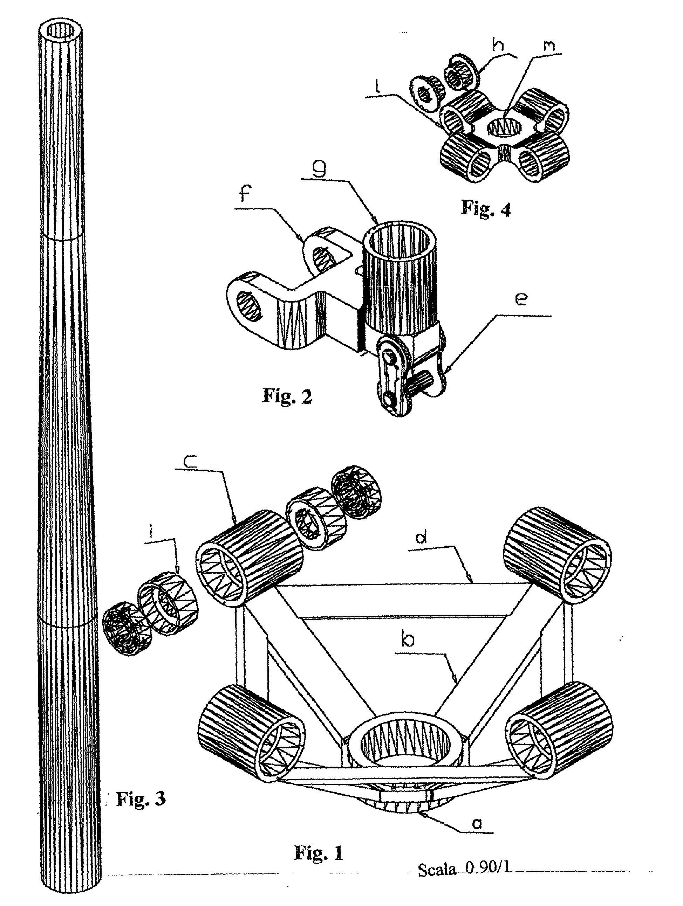

L'appareil, en substance, est composé :
1) de un support principal **Fig.1,** realisé en une seul pièce, sur lequel viennent fixées les parties mobiles et le moteur ;
2) de quattre bielles au angle de 90° **Fig.2 ;**
3) de quattre barres gaulantes creuses, à la forme mixte, cylindrique et tronconique **Fig.3 ;**
4) de un croisillon **Fig. 4.**

Le support **Fig.1** prend la forme d'un tronc de pyramide renversé, à la base majeure carrée, dont les coins latèrals constituent les bras-supports des bielles **Fig.1 (b).** Ceux-ci partent de la base infèrieure **Fig.1 (a),** laquelle est entièrement fileté, pour connecter l'appareil au propulseur ( pas objet de la présente invention). A l'extrémité opposé les bras prendent la forme d'un petit cylindre horizontal creux **Fig.1 (c) ,** siège de coussinets où les bielles trouvent leur point d'appui ; les bielles **Fig.2** sont en substance des leviers avec la caractéristique d'avoir le bras de la résistance orthogonale à celui de la puissance dans le point d'application de cette dernière .Ceci permet de porter au fruit à gauler, par les barres gaulantes **Fig. 3,** un mouvement composé ( translation-rotation).

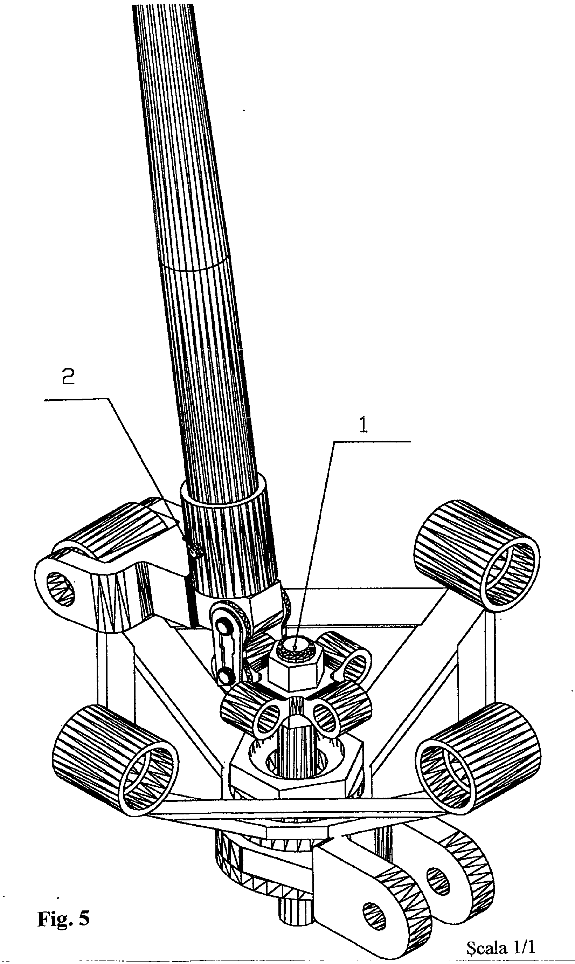

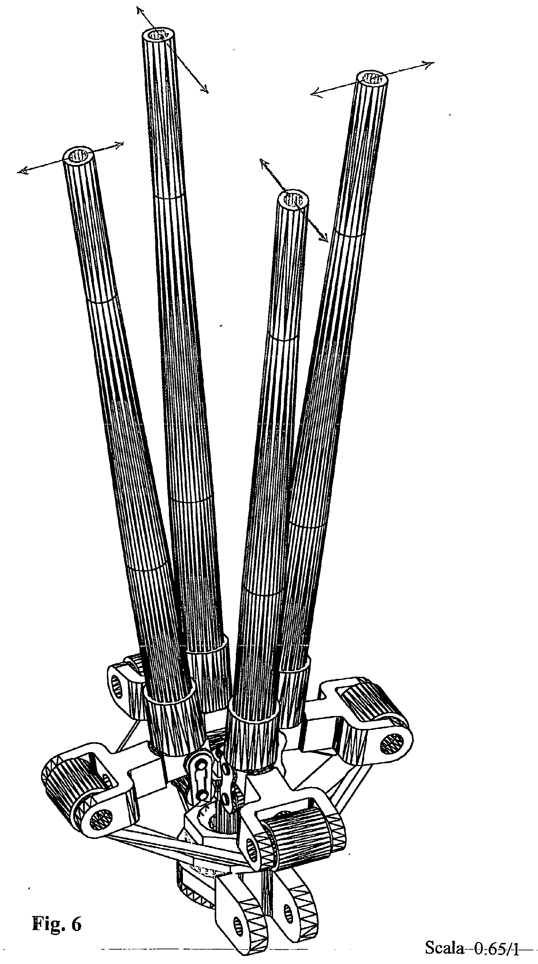

Les bielles viennent connectées soit au support soit au croisillon, lequel à son tour est lié au petit arbre du moteur **Fig.5 (1),** où il se boulonne au trou **Fig.4 (m) :**
- au support elles se connectent, par la fourche **Fig.2 (f),** dans le cylindre **Fig. 1 (c),** après l'introduction dans ce dernier de deux boucles de plastique **Fig.1 (i)** et de deux coussinets d'acier (les boucles ont la fonction d'absorber les sollicitations mécaniques à la charge des coussinets logés dans leur interieur) ;
- au croisillon elles se connectent par une maille pour chaine **Fig.2 (e).**

Avant d'accrocher la maille à la bielle et au croisillon, les deux petitets boucles **Fig.4 (h)** s'introduisent dans les respectifs trous, dans le trou du croisillon **Fig.4 (1)** et dans celui correspondant de la bielle **Fig.2,** où la maille est représentées déjà accrochée et, donc, les petites boucles déjà introduites. Celles-ci ont la fonction de coussinets pour les pivots de la maille, par conséquent elles sont réalisées en plastique autolubrifiante et dimensionnées de manière que, quand elles sont en siège , restent entre elles un espace vide, dans lequel on injecte du gras , au but d'integrer la lubrification.

## Revendications

1. Gauleur **caractérisé en ce qu**'il est composé de deux couples d'éléments gaulants qui se meuvent dans deux directions distinctes, orthogonales, entre elles ce, qui permet à la machine d'agir en même temps sur un espace double lesdits éléments étants déposés aux sommets des diagonales d'un support à plan carré (d) avec les éléments gaulents tournés vers l'intérieur, l'un en face de l'autre.

2. Gauleur selon la revendication (1), **caracterisé par** la structure particulière du support principal, réalisé dans une seule pièce, à la forme tronc-pyramidale renversée, à la base majeure carrée qui permet la disposition des quatre gauleurs.

3. Gauleur selon les revendications précédentes **caractérisé par** la structure des bielles (f, e) : anguleuses à 90°, avec une extrémité galbée à fourche (f), au but de la lier au point d'appui d'une façon plus stable ; l'autre extrémité galbée en forme de cylindre vertical (g), pour y loger les barres gaulantes, trouées à peine sous le cylindre pour fixer la maille de raccord (e) avec un croisillon (m, h);

4. Gauleur selon les revendications précédentes, **caractérisé par** un système de raccord des bielles, qui sont des leviers, avec le croisillon par la maille (e), qui a lieu dans le trou pratiqué sous le cylindre (g), afin que les barres gaulantes restent l'une en face de l'autre, à l'intérieur du support, permettant à la machine de prendre un rangement compact et de produir deux mouvements simultanés de translation et de rotation ;

5. Gauleur selon les revendications précédentes, **caractérisé par** la forme particulière des barres gaulantes lesquelles sont creuses avec un diamètre décroissant, pour les rendre plus légères, et galbées en trois sections, à diamètre décroissant, la première cylindrique, la deuxième tronc-conique et la troisième cylindrique, afin de leur donner une robustesse graduelle, en passant d'une extrémité à l'autre, afin de les rendre moins flexibles et donc plus résistantes ;

6. Gauleur selon les revendications précédentes, **caractérisé par** l'emploi de petites boucles en plastique spécial, autolubrifiant, qui ont la fonction de coussinets, dans les points de fixation de la maille à la bielle et au croisillon avec la possibilité de compléter leur action lubrifiante avec de la graisse.

7. Gauleur selon les revendications précédentes, **caractérisé par** l'emploi de petites boucles en plastique dans les cylindres du point d'appui (c), avant d' y loger les deux coussinets d'acier, afin d'atténuer les sollicitations mécaniques de ces derniers ;

8. Gauleur selon les revendications précédentes, **caractérisés par** l'emploi de deux coussinets pour porter à son propre point d'appui les bielles, afin de les rendre plus stables et plus résistantes, pour éliminera d'éventuelles vibrations passives.

## Claims

1. Shaking device **characterized in that** it is constituted by two couples of shaking elements which move according to two different reciprocally orthogonal directions, enabling the machine to act at the same time on a double space, being the cited elements positioned at the top of the diagonals of a support (d) having a squared plan with the shaking elements turned inwards, facing each other.

2. Shaking device according to claim 1, **characterized by** the peculiar structure of the main support made in a single piece, with overturned truncated pyramidal shape, having squared major base enabling the positioning of four shaking devices.

3. Shaking device according to the previous claims, **characterized by** the structure of the connecting-rods (f, e): angled by 90°, having a forkshaped end (f) so as to be connected to the supporting point in a quite steady way; being the opposite end vertical cylinder-shaped (g) in order to receive the shaking bars, bored just under the cylinder in order to fix the connecting chain link to a crosspiece (m, h).

4. Shaking device according to the previous claims, **characterized by** a connecting system for the connecting-rods, which are levers, with the crosspiece by means of the chain link (e), whose connection takes place in the hole made under the cylinder (g), so that the shaking bars keep facing each other, inside the support, thus enabling the machine to take on a compact arrangement and to cause two simultaneous movements of translation and rotation.

5. Shaking device according to the previous claims, **characterized by** the particular shape of the shaking bars, which are hollow, with decreasing diameter, in order to make them lighter, and shaped by three sections with decreasing diameter, the first one being cylindrical, the second one being shaped as a truncated cone and the third one cylindrical, so as to give them a gradual strength from an end to the opposite one, in order to make them less flexible and consequently more resistant.

6. Shaking device according to the previous claims, **characterized by** the use of small rings made of special plastic, self-lubricating, which serve as bearings at the fixing positions of the chain link to the connecting-rod and to the crosspiece, possibly increasing their lubricating action by means of grease.

7. Shaking device according to the previous claims, **characterized by** the use of small plastic rings in the cylinders of the supporting point (c), before placing there the two bearings of steel, in order to soften their mechanical stress.

8. Shaking device according to the previous claims, **characterized by** the use of two bearings in order to place the connecting-rods to their proper supporting point, so as to make them steadier and more resistant, and to eliminate any possible passive vibration.

## Patentansprüche

1. Rüttelvorrichtung **dadurch gekennzeichnet, dass** sie aus zwei Paare von rüttelnden Elementen bewegend in zwei verschiedene rechtwinklige Richtungen besteht, wobei der Maschine erlaubt wird, gleichzeitig über einen zweifachen Raum zu handeln, wobei die genannten Elemente an den Gipfeln der Diagonalen eines einen quadratischen Grundplan aufweisenden Halters geordnet sind, in dem die genannten rüttelnden Elemente gegenübergestellt nach innen richtet sind.

2. Rüttelvorrichtung nach Anspruch 1 **gekennzeichnet durch** die besondere Struktur des einteiligen Haupthalters, der die Gestalt einer umgekehrten abgestumpften Pyramide hat und deren größere Grundfläche das Positionieren von vier rüttelnden Elementen erlaubt.

3. Rüttelvorrichtung nach den vorherigen Ansprüchen **gekennzeichnet durch** die Struktur der Schubstangen (f, e): aufweisend eine 90°-Abwinklung, ein Gabel-geformtes Ende, um sie auf einer festeren Weise mit dem Stützpunkt zu verbinden; das andere Ende mit der Form eines vertikalen Zylinders (g), um dort die rüttelnden Stangen zu stellen, wobei sie kaum unterm Zylinder gelocht sind, um das Verbindungskettenglied zu einem Kreuz (m, h) zu festen.

4. Rüttelvorrichtung nach den vorherigen Ansprüchen **gekennzeichnet durch** ein Verbindungssystem der Schubstangen, die Hebel sind, mit dem Kreuz mittels des Kettengliedes (e), deren Verbindung im unter dem Zylinder (g) ausgeführten Loch stattfindet, so dass die rüttelnden Stangen gegenübergestellt bleiben, innerhalb des Halters, wobei der Maschine erlaubt wird, kompakte Anordnung anzunehmen und zwei gleichzeitige Translations- und Drehungs-Bewegungen zu erzeugen.

5. Rüttelvorrichtung nach den vorherigen Ansprüchen **gekennzeichnet durch** die besondere Form der rüttelnden Stangen, die hohl mit abnehmendem Durchmesser sind, um sie leichter zu machen, und nach drei Abschnitten mit abnehmendem Durchmesser geformt sind, wobei der Erste zylindrisch ist, der Zweite die Form eines Kegelstumpfes hat und der Dritte zylindrisch ist, ihnen eine stufenweise Stärke von einem Ende zu den anderen zu geben, um sie weniger flexibel und so widerstandsfähiger zu machen.

6. Rüttelvorrichtung nach den vorherigen Ansprüchen **gekennzeichnet durch** die Benutzung von kleinen selbstschmierenden Ringen von besonderer Plastik, die als Lager an den Aufspannpunkten von dem Kettenglied mit der Schubstange und mit dem Kreuz, wobei ihre schmierende Wirkung eventuell **durch** Schmiere verstärkt werden kann.

7. Rüttelvorrichtung nach den vorherigen Ansprüchen **gekennzeichnet durch** die Benutzung von kleinen Plastikringen in den Zylindern des Stützepunktes (c), bevor die zwei Stahllager gelegen werden, um ihre mechanischen Belastungen abzuschwächen.

8. Rüttelvorrichtung nach den vorherigen Ansprüchen **gekennzeichnet durch** die Benutzung von zwei Lagern, um die Schubstangen in ihrem eigenen Stützepunkt zu stellen, um sie fester und stärker zu machen und jede mögliche Vibration zu beseitigen.
